# EUROPÄISCHE PATENTANMELDUNG

(11) **EP 0 699 722 A2**
(43) Veröffentlichungstag der Anmeldung: **06.03.1996**
(21) Anmeldenummer: 95110113.8
(22) Anmeldetag: 29.06.1995
(51) Int. Cl.: C09D 7/00, C09D 5/03, C09D 5/36

(54) **Lack, insbesondere Pulverlack zum Lackieren der Oberflächen von Substrakten, insbesondere von Fahrzeugkarosserien**

(30) Priorität: 31.08.1994 DE 4430919
(71) Anmelder: DAIMLER-BENZ AKTIENGESELLSCHAFT, D-70567 Stuttgart (DE)
(72) Erfinder: Mezger, Fritz, Dr., D-89079 Gögglingen (DE)

(57) **Zusammenfassung**

Die Erfindung betrifft einen Lack zum Lackieren insbesondere von Fahrzeugkarosserien, der mehrere unterschiedliche Lack-Körper enthält, die sich untereinander hinsichtlich bestimmter Stoffwerte unterscheiden und die sich nach ihrer gemeinsamen Applikation auf der Substratoberfläche entmischen und sich selbsttätig in einer durch die Größe der Stoffwerte bestimmten Reienfolge lagenweise auf der Substratoberfläche anordnen. Der sich in einer unteren Lage anordnende Lack-Körper ist mit absorbtiv wirkenden Farbpigmenten versehen. In dem Lack-Körper der sich nach der Applikation selbsttäig darüber abscheidenden Lacklage sind plättchenförmige Interferenzpigmente aus flüssigkristallinen Seitenketten-Polymeren (LCP) eingemischt, die sich selbsttätig etwa parallel zur Substratoberfläche ausrichten. Alternativ kann der Lack-Körper dieser Lage selber aus einem aushärtbaren flüssigkristallinen Polymer (LCP) bestehen. Die farbliche Erscheinung dieser Lage wird durch interferentiell wirkende, bei der Lack-Applikation unvernetzte und sich selbsttätig etwa quer zur Gegenstandsoberfläche ausrichtende Mesogene des Lack-Körpers bestimmt, die sich selbsttätig chiral-nematisch anordnen und in dieser Anordnung eine Helix bilden. Die im Lack-Körper der unteren Lage enthaltenen Farbpigmente sind schwarz oder in der selben Farbtönung gehalten wie ein Farbton der farbbestimmenden Interferenzpigmente bzw. der Helices in dem anderen Lack-Körper.

## Beschreibung

Die Erfindung geht aus von einem Lack, insbeondere Pulverlack zum Lackieren der Oberflächen von Substraten, insbesondere von Fahrzeugkarosserien nach dem Oberbegriff von Anspruch 1, wie er beispielsweise aus der GB-PS 1 570 540, GB-PS 2 046 765 oder der DE-OS 28 21 012 als bekannt hervorgeht.

Bei den bekannten Lacksystemen handelt es sich um sog. Mehrschichten-Lacke (multilayer coatings), die sowohl auf Basis von Pulverlacken als auch auf Basis von Lösemittel- oder Wasserbasislacken gebildet sein können. Die unterschiedlichen Lacklagen zugeordneten Polymere müssen gewisse unterschiedliche Affinitätsparameter, Multilayerparameter und Oberflächenspannungswerte besitzen, damit die Trennung der einzelnen Lagen nach der Applikation auf der Substratoberfläche zustandekommt. Dabei müssen die gegebenenfalls in einem Lack-Körper bzw. Bindemittel eingelagerten Pigmente zu den anderen Lack-Körpern ebenfalls eine Nicht-Affinität bzw. sehr geringe Affinität aufweisen. Der Vorteil derartiger Mehrlagen-Lacksysteme besteht darin, daß anwendungsoptimierte Lacklagen in einem einzigen Applikationsvorgang aufgebracht werden können. Beispielsweise soll die Außenlage besonders kratzfest und resistent gegen chemische Einflüsse sein, wogegen die substratnah liegende Lacklage einen guten Korrosionsschutz des Substrates und eine gute Haftung zu ihm bieten soll. Bei der Anwendung mehrlagiger Lackierungen in der Fahrzeuglackierung ist z.B. von Bedeutung, daß die farbgebenden Lacklagen durch einen Klarlack gegen Witterungseinflüsse und Verkratzungen besser geschützt sind, insbesondere in den Fällen, in denen die farbbestimmende Lacklage mit glänzenden Metallpigmenten versehen ist. Wenngleich sich nach Kenntnis der Anmelderin die eingangs angesprochenen Mehrlagen-Lacksysteme in der Fahrzeuglackierung bisher nicht eingeführt haben, so versprechen sie dennoch auch in diesem Bereich u.U. gewisse Anwendungsvorteile. Die Abscheidung des applizierten Lackes in mehreren Schichten wird dadurch erreicht, daß sich zwei oder mehr Polymere nach der Applikation und/oder dem Erwärmen teilweise separieren, d.h. einen Konzentrationsgradienten ausbilden. Die Separierung kann dadurch erfolgen, daß zwei oder mehr Bindemittelsysteme vor der Vernetzung unverträglich sind, also eine Mischphase bilden und/oder dadurch, daß zwei oder mehr Bindemittelsysteme vor der Vernetzung zwar verträglich sind und eine Monophase bilden, aber sich durch die und bei der Vernetzung separieren. Dabei sollte der Härter mit den Systemen gleich schnell reagieren. Die Separierung wird durch Unverträglichkeit der Polymere untereinander erreicht, wobei die Unverträglichkeit nicht so groß sein darf, daß keine Haftung zwischen den Schichten vorhanden ist. Das Polymer mit der geringsten Oberflächenspannung bildet die Grenzlage zur Luft.

Aufgabe der Erfindung ist es, den gattungsgemäß zugrundegelegten Lack dahingehend zu verbessern, daß mit ihm Effektlacksysteme, deren Farbeffekte auf Interferenzerscheinungen beruht, in einer geringen Anzahl von Applikationsschritten aufgebracht werden können.

Diese Aufgabe wird ausgehend von dem gattungsgemäßen Lack erfindungsgemäß durch die kennzeichnenden Merkmale von Anspruch 1 oder durch die kennzeichnenden Merkmale von Anspruch 2 gelöst.

Eine bevorzugte Ausgestaltung des erfindungsgemäßen Lackes besteht darin, daß er lediglich den Lack-Körper und die Absorptionspigmente für die Basislage und den für die darauf liegende interferentiell wirkende Lacklage enthält, so daß ein etwaiger Klarlack in einem anschließenden, separaten Applikationsschritt aufgebracht werden muß. Dies kann insbesondere dann von Vorteil sein, wenn die in einem einzigen Applikationsschritt auftragbare Lackmenge je Flächeneinheit aufgrund der Gefahr des schwerkraftbedingten Absackens des noch unverfestigten Lackes an Vertikalflächen auf bestimmte Maximalmengen beschränkt sein muß. Bei der für Außenflächen von Fahrzeugkarosserien meist gestellten Forderung eines guten Verlaufes des Lackes darf dieser bei der Applikation nicht zu zähflüssig sein, weil sich sonst eine sog. Orangenschalenstruktur an der Lackoberfläche einstellt, die auch durch ein Überlagern einer nachträglich applizierten Klarlackschicht nicht mehr, sondern höchstens durch ein aufwendiges Schleifen beseitigt werden kann.

Grundlage der vorliegenden Erfindung ist einerseits die Vereinfachung des Produktionsprozesses "Lackieren" dadurch, daß mehrere Lackschichten durch einmalige Applikation auf das Substrat, vorzugsweise die Fahrzeugkarosserie gebracht werden. Andererseits können dadurch zwei Pigmente mit unterschiedlicher Affinität zu beiden Polymeren eingearbeitet werden. Dies bedeutet für Effektpigmente auf der Basis flüssigkristalliner Polymere, die zur Ausbildung der Farbeffekte einen deckenden, vorzugsweise schwarzen Untergrund benötigen, eine Vereinfachung dahingehend, daß nicht nur die beiden Schichten sondern auch noch eine darüberliegende Klarlackschicht gleichzeitig aufgetragen werden können. Pigmente auf Basis cholesterischer flüssigkristalliner Polymere (LCP's) sind nicht deckende Pigmente, bei denen je nach Gängigkeit der Helix zirkular polarisiertes Licht eines bestimmten schmalbandigen Wellenlängenbereiches reflektiert bzw. transmittiert wird. Für die Ausbildung einer Farberscheinung ist es daher notwendig, daß von dem transmittierten Lichtanteil wenigstens ein gewisser Anteil absorbiert wird. Bei vollständiger Absorption des durchgehenden Lichtanteiles in einem schwarzen Untergrund kommt allein die Farbe des schmalbandigen interferentiell reflektierten Lichtes zur Geltung. Ist der Untergrund selber aufgrund von eingelagerten farbigen Absorptionspigmenten in einer bestimmten Farbe gehalten, so kommt eine Mischung aus dem interferentiell reflektierten Lichtanteil und aus dem vom farbigen Untergrund reflektierten Lichtanteil zustande. Ist der Untergrund beispielsweise in der oder einer Effektfarbe der Interferenzpigmente gehalten, so kommt eine besonders intensive Farberscheinung in nur einem Farbton zu Stande.

Wichtig für die vorliegende Erfindung ist es, daß die Interferenzpigmente eine hohe Affinität zu demjenigen Bindemittel besitzen, welches die obere Schicht bildet und das das Absorptionspigment eine hohe Affinität zum Bindemittel der unteren Schicht aufweist.

Als Bindemittel-Polymere kommen Systeme in Frage, die zum einen die unterschiedlichen Affinitätsparameter, Multilayer-Parameter und Oberflächenspannungen aufweisen und die im übrigen gebildet sind aus
▷ selbstvernetzenden Polymeren und Bindemittel/Härter-Systemen und/oder aus
▷ mehreren miteinander unverträglichen Bindemittelsystemen und einem Härter und/oder aus
▷ mehreren miteinander verträglichen Bindemittelsystemen, die durch Reaktion mit dem Härter unverträglich werden und/oder aus
▷ mehreren Bindemittel/Härter-Systemen, wobei die Komponenten je eines Bindemittel/Härter-Systems eine hohe Affinität untereinander und jeweils eine sehr geringe Affinintät zu den Komponenten der anderen Bindemittel/Härter-Systeme haben.

## Patentansprüche

1. Lack, insbeondere Pulverlack zum Lackieren der Oberflächen von Substraten, insbesondere von Fahrzeugkarosserien, mit mehreren unterschiedlichen Lack-Körpern, die sich untereinander hinsichtlich ihrer Affinitätsparameter und ihrer Multilayerparameter und hinsichtlich ihrer Oberflächenspannungwerte gegenüber Luft und gegenüber der Substratoberfläche unterscheiden und die sich nach ihrer gemeinsamen Applikation auf der Substratoberfläche entmischen und sich selbsttätig in einer durch die Größe der genannten Parameter und /oder der Oberflächenspannungswerte bestimmten Reienfolge lagenweise auf der Substratoberfläche anordnen,
**gekennzeichnet durch** die Gemeinsamkeit folgender Merkmale:
▷ der sich in einer unteren, d.h. der Substratoberfläche zunächstliegenden Lage anordnende Lack-Körper ist mit absorbtiv wirkenden Farbpigmenten versehen,
▷ in dem Lack-Körper der sich nach der Applikation selbsttätig darüber abscheidenden Lacklage sind zumindest auch, vorzugsweise nur plättchenförmige, bei der Lagenanordnung sich selbsttätig etwa parallel zur Substratoberfläche ausrichtende Interferenzpigmente aus flüssigkristallinen Seitenketten-Polymeren (LCP) eingemischt,
▷ die im Lack-Körper der unteren Lage enthaltenen Farbpigmente sind schwarz oder in der selben Farbtönung gehalten wie ein Farbton der farbbestimmenden Interferenzpigmente in dem Lack-Körper der anderen Lack-Lage.

2. Lack nach dem **Oberbegriff** von Anspruch 1,
**gekennzeichnet durch** die Gemeinsamkeit folgender Merkmale:
▷ der sich in einer unteren, d.h. der Substratoberfläche zunächstliegenden Lage anordnende Lack-Körper ist mit absorbtiv wirkenden Farbpigmenten versehen,
▷ der Lack-Körper der sich bei der Applikation selbsttätig darüber abscheidenden Lacklage besteht im wesentlichen aus einem aushärtbaren flüssigkristallinen Polymer (LCP) oder aus einem Gemisch verschiedener flüssigkristalliner Polymere, wobei die farbliche Erscheinung des Lackes zumindest auch, vorzugsweise nur durch interferentiell wirkende, bei der Lack-Applikation unvernetzte und sich selbsttätig etwa quer zur Gegenstandsoberfläche ausrichtende Mesogene des Lack-Körpers bestimmt ist, welche Mesogene die Eigenschaft besitzen, daß sie sich bei Aufbringung auf eine Substratoberfläche selbsttätig näherungsweise chiral-nematisch anordnen und in dieser Anordnung eine Helix bilden,
▷ die im Lack-Körper der unteren Lage enthaltenen Farbpigmente sind schwarz oder in der selben Farbtönung gehalten wie ein Farbton der farbbestimmenden, interferentiell wirkenden Mesogene des flüssigkristallinen Polymers bzw. der flüssigkristallinen Polymere des Lack-Körpers der anderen Lacklage.

3. Lack nach Anspruch 1 oder 2,
**dadurch gekennzeichnet,**
daß ein dritter, als Klarlack ausgebildeter Lack-Körper im Lack enthalten ist, der sich ebenfalls hinsichtlich seiner Affinitäts- und Multilayerparameter sowie hinsichtlich seiner Oberflächenspannungwerte gegenüber Luft und gegenüber der Substratoberfläche von den entsprechenden Werten der anderen Lack-Körper in der Weise unterscheidet, daß er nach der gemeinsamen Applikation auf der Substratoberfläche und dem Entmischen sich selbsttätig in einer obersten, d.h. der freien Atmosphäre zunächstliegenden Lage anordnet.

4. Lack nach Anspruch 1,
**dadurch gekennzeichnet,**
daß die Interferenzpigmente eine Stärke von etwa 3 bis 15 µm aufweisen.

5. Lack nach Anspruch 1,
**dadurch gekennzeichnet,**
daß die plättchenförmigen Interferenzpigmente einen Durchmesser von 5 bis 100 µm, vorzugsweise von 10 bis 50 µm aufweisen.

6. Lack nach Anspruch 2,
**dadurch gekennzeichnet,**
daß die Helix der flüssigkristalline(n) Polymer(e) in ihrer Ganghöhe thermisch beeinflußbar ist, wobei das/die flüssigkristalline(n) Polymer(e) zum einen derart ausgewählt ist/sind, daß es/sie thermisch nicht vernetzbar ist/sind und zum anderen derart ausgewählt ist/sind, daß das Temperaturniveau, bei dem die Ganghöhe der Helix beeinflußbar ist, oberhalb der Gebrauchstemperatur des zu lackierenden Gebrauchsgegenstandes liegt.
